# EUROPEAN PATENT SPECIFICATION

(11) **EP 1 645 646 B1**
(45) Date of publication and mention of the grant of the patent: **05.10.2011**
(21) Application number: 04745537.3
(22) Date of filing: 27.05.2004
(51) Int. Cl.: C22C 13/00, H01M 2/10, H01M 2/34, H01M 10/42, H01H 37/76

(54) **TEMPERATURE FUSE ELEMENT, TEMPERATURE FUSE AND BATTERY USING THE SAME**
TEMPERATURSICHERUNGSELEMENT, TEMPERATURSICHERUNG UND BATTERIE DAMIT
ELEMENT DE FUSIBLE THERMIQUE, FUSIBLE THERMIQUE ET BATTERIE UTILISANT LEDIT FUSIBLE

(30) Priority: 29.05.2003 JP 2003152492
(43) Date of publication of application: 12.04.2006
(73) Proprietor: Panasonic Corporation, Kadoma-shi Osaka 571-8501 (JP)
(72) Inventor: SENDA, Kenji, Fukui (JP); MUKAI, Takahiro, Miyazaki (JP); IZAKI, Masatoshi, Miyazaki (JP)
(74) Representative: TBK
(86) International application number: PCT/JP2004/007657
(87) International publication number: WO 2004/106568

(56) References cited:
- JP-A- 7 227 690
- JP-A- 2001 266 724
- JP-A- 2002 025 406
- JP-A- 2002 216 602
- JP-A- 2003 007 185
- JP-A- 2003 034 831
- JP-A- 2003 082 430
- JP-A- 2003 086 070
- JP-A- 2003 126 988
- JP-A- 2003 257 294
- JP-B2- 3 213 051
- US-A1- 2002 011 527
- US-B1- 6 184 475
- YOON ET AL: "Thermodynamics-aided alloy design and evaluation of Pb-free solder, Sn-Bi-In-Zn system" ACTA MATERIALIA, ELSEVIER, vol. 45, no. 3, March 1997 (1997-03), pages 951-960, XP005009832 OXFORD, GB ISSN: 1359-6454
- LEE N-C: "GETTING READY FOR LEAD-FREE SOLDERS" SOLDERING AND SURFACE MOUNT TECHNOLOGY, vol. 26, July 1997 (1997-07), pages 65-69, XP008060400 ISSN: 0954-0911
- OHNUMA I ET AL: "Phase equilibria of Sn-In based micro-soldering alloys" JOURNAL OF ELECTRONIC MATERIALS, WARRENDALE, PA, US, vol. 29, no. 10, 2000, pages 1113-1121, XP002976380 ISSN: 0361-5235
- SABBAR A. ET AL.: "Contribution a l'etude du diagramme d'equilibre des phases du systeme ternaire In-Sn-Zn" THERMOCHIMICA ACTA, vol. 369, 2001, pages 125-136, XP002434060
- YOON SEUNG WOOK ET AL: "ALLOY DESIGN OF SN-ZN-X (X = IN, BI) SOLDER SYSTEMS THROUGH PHASE EQUILIBRIA CALCULATIONS" TMS ANNUAL MEETING. DESIGN RELIABILITY OF SOLDERS AND SOLDER INTERCONNECTIONS, 1997, pages 121-128, XP009079430

## Description

### TECHNICAL FIELD

The present invention relates to a thermal fuse element, a thermal fuse and a batter using such a thermal fuse.

### BACKGROUND ART

In recent years, it has become problematic that Cd, Pb used in electronic devices leach into the natural environment and, accordingly, there has been an increasing demand for making electronic devices Cd-free and Pb-free. Therefore, thermal fuses used to protect the electronic devices are desired to contain neither Pb nor Cd.

Particularly, in a packaged battery used as a power supply of a mobile phone, a battery and a thermal fuse are connected by spot welding, and Pb-free solder has been used even in a protecting circuit for controlling the charging and discharging of the battery. Thus, there has been a strong demand for thermal fuses containing neither Pb nor Cd.

Since the heat capacity of the above packaged battery becomes smaller with the miniaturization thereof, there has been an increasing tendency to speed up a temperature rising rate during the heat generation. Thus, the thermal fuse is required to have a low operating temperature of 85 to 108°C in order to quickly shut off a current in the event of abnormality.

In the case of using the packaged battery, for example, under the scorching sun, the packaged battery is, in some cases, used while the surface temperature thereof is about 55°C due to the ambient temperature and the heat generation by the battery. Therefore, the thermal fuse is required to secure its function even in the case of being used for a long time in a temperature state of about 55°C.

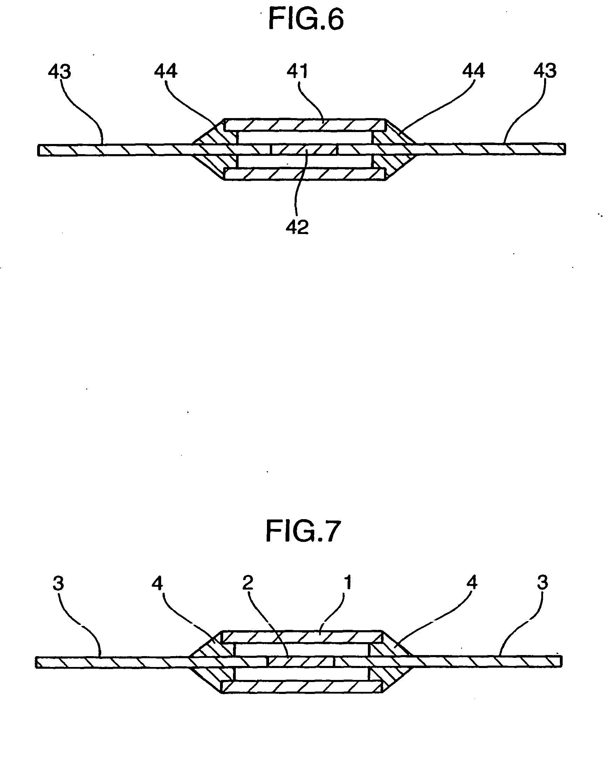

FIG. 7 is a section of a prior art thermal fuse. As shown in FIG. 7, the prior art thermal fuse comprises: a cylindrical insulating casing 1 having openings at opposite ends; a fusible alloy 2 in the form of a substantially round column or a substantially rectangular column arranged in the insulating casing 1; a pair of lead conductors 3 whose each one end portion connected with the corresponding end of the fusible alloy 2 and the other end portion protruded through the corresponding opening of the insulating casing 1 to the outside of the insulating casing 1; flux (not shown) coated on the fusible alloy 2; and sealing elements 4 sealing the openings at the opposite end portions of the insulating casing 1.

For example, in a thermal fuse operable at 85 to 108°C, the fusible alloy 2 has been made of an Sn-Cd-In eutectic alloy (melting point of 93°C) or an Sn-Bi-Pb eutectic alloy (melting point of 95°C). An alloy-type thermal fuse disclosed in Japanese Unexamined Patent Publication No. 2000-90792 is known as such a prior art thermal fuse.

However, since the prior art thermal fuse comprises the fusible alloy 2 containing Pb or Cd, there is a possibility of disturbing the natural environment due to the leached Pb or Cd if electronic devices using this thermal fuse are discarded.

Japanese Patent Application number JP 2001 266724 A disclosed an alloy as a fuse element, the alloy having a composition of 40-46 weight % Sn, 7-12 weight % Bi and with the remainder being In.

US Patent Application number US-B1-6 184 475 discloses a lead-free solder alloy composition containing Sn, Bi and In. The alloy contains not more than about 60 wt % Bi; not more than about 50 wt % In; optionally at least one element selected from Ag, Zn, Ge, Ga, Sb, and P; and Sn.

### DISCLOSURE OF THE INVENTION

An object of the present invention is to provide a thermal fuse element, a thermal fuse and a battery using such a thermal fuse, which are designed to suppress harm to the natural environment.

One aspect of the present invention is directed to a thermal fuse element which is cut off by melting at a specified temperature, including an Sn-Bi-In-Zn alloy

Since this thermal fuse element includes an Sn-Bi-In-Zn alloy, neither Pb nor Cd is contained in the thermal fuse element unlike the prior art. Thus, it is possible to provide a thermal fuse element capable of suppressing harm to the natural environment.

The thermal fuse element includes an Sn-Bi-In-Zn alloy consisting of 0.5 to 15 weight% of Bi; 45 to 55 weight% of In; and 0.5 to 5 weight% of Zn; with the balance being Sn and unavoidable impurities. In this case, it is possible to provide a thermal fuse element having an arbitrary operating temperature of 85°C to 107°C.

The thermal fuse element more preferably includes an Sh-Bi-In-Zn alloy containing: 0.5 to 15 weight% of Bi; 48 to 55 weight% of In; 1.3 to 5 weight% of Zn; with the balance being Sn.

In this case, the thermal fuse element can be used for a long time at a temperature exceeding the melting point of flux, and the fluctuation of the melting point caused by the composition variation can be reduced. Thus, it is possible to provide a thermal fuse element having a highly precise cut-off temperature by melting.

Another aspect of the present invention is directed to a thermal fuse comprising an alloy cut off by melting at a specified temperature, wherein the fusible alloy includes an Sn-Bi-In-Zn alloy

Since the alloy includes an Sn-Bi-In-Zn alloy in this thermal fuse, neither Pb nor Cd is contained in the alloy unlike the prior art. Thus, it is possible to provide a thermal fuse capable of suppressing harm to the natural environment.

The alloy includes an Sn-Bi-In-Zn alloy containing: 0.5 to 15 weight% of Bi; 45 to 55 weight% of In; and 0.5 to 5 weight% of Zn; with the balance being Sn. In this case, it is possible to provide a thermal fuse element having an arbitrary operating temperature of 85°C to 107°C

The alloy more preferably includes an Sn-Bi-In-Zn alloy containing: 0.5 to 15 weight% of Bi; 48 to 55 weight% of In; and 1.3 to 5 weight% of Zn; with the balance being Sn

In this case, the thermal fuse can be used for a long time at a temperature exceeding the melting point of the flux, and the fluctuation of the melting point caused by the composition variation can be reduced. Thus, it is possible to provide a thermal fuse having a highly precise cut-off temperature by melting.

Preferably, the alloy is coated by flux and the melting point of the flux is 60°C or higher.

In this case, even if the thermal fuse is used for a long time at about 55°C, a decrease of an activator contained in the flux can be made smaller. As a result, it is possible to provide a thermal fuse whose quick cut-off ability by melting can be ensured for a long time.

Preferably, the alloy is coated by flux and a bromide activator is added in the flux.

In this case, even if the thermal fuse is used for a long time at a temperature exceeding the melting point of the flux, a decrease of the activator contained in the flux can be reduced. As a result, it is possible to provide a thermal fuse whose quick cut-off ability by melting can be ensured for a long time.

The thermal fuse preferably further comprises: a pair of metal terminals; a first insulating film to which the pair of metal terminals are attached; and a second insulating film attached to the first insulating film so as to define a space with the first insulating films; wherein the alloy is arranged between the first and second insulating films and connected between the leading end portions of the pair of metal terminals.

In this case, it is possible to cover the alloy by the first and second insulating films, to seal the alloy by sealably fixing an outer peripheral portion of the insulating film and that of the second insulating film while leaving a portion where the alloy is provided unfixed. Thus, the deterioration of the alloy can be prevented.

La is preferably set to lie within a range of 2.0 mm to 7.5 mm, wherein the La is a length of a thermal-fuse main portion comprising the first insulating film, the second insulating film and the alloy. In this case, the thermal fuse can be miniaturized.

Lb is preferably set to lie within a range of 0.4 mm to 1.5 mm, wherein the Lb is a thickness between the outer surface of the first insulating film and the outer surface of the second insulating film. In this case, the thermal fuse can be thinned.

Preferably, a projection is formed at an end portion of each metal terminal, the pair of metal terminals are attached to the first insulating film such that the projections project from the first insulating film side toward the second insulating film side, and the alloy is connected with the projections. In this case, the pair of metal terminals can be precisely attached to the first insulating film, and the thin-type thermal fuse can be produced with high precision.

A projection is preferably formed at an end portion of each metal terminal which extends out from the first insulating film and from the second insulating film. In this case, if the metal terminals and external wiring are connected at the projections by electric welding, a welding current can be concentrated. Thus, welding strength and welding positions can be stabilized, thereby improving productivity.

The thermal fuse may further comprise: an insulating casing in a form of a tube having a bottom formed and having an opening; a pair of lead conductors whose each one end portion protruded in the same direction through the opening of the insulation casing outside the insulating casing; and a sealing element for sealing the opening of the insulating casing; wherein the alloy is placed in the insulating casing and connected with the other end portions of the pair of lead conductors.

In this case, the pair of lead conductors whose the other end portions are connected with the alloy protrudes the one end portions in the same direction through the opening of the insulating casing to the outside of the insulating casing. Thus, a degree of freedom in mounting this thermal fuse on a battery or the like can be improved.

The thermal fuse may further comprise: an insulating casing in a form of a cylindrical tube having openings at opposite ends; a pair of lead conductors whose each one end portion protruded through the corresponding one of the openings at the opposite ends of the insulating casing; and sealing elements for sealing the openings at the opposite ends of the insulating casing; wherein the alloy is placed in the insulating casing and connected with the other ends of the pair of lead conductors.

In this case, since the insulating casing having the alloy placed therein is in a form of a cylindrical tube having openings at the opposite ends, there is no directionality upon mounting the thermal fuse on a battery or the like, wherefore the thermal fuse can be easily handled at the time of production

Still another aspect of the present invention is directed to a battery, comprising: a battery main body; and a thermal fuse electrically connected to shut off a current upon an abnormal heat generation of the battery main body, wherein the thermal fuse includes an alloy which is cut off by melting at a specified temperature, and the alloy includes an Sn-Bi-In-Zn alloy .

In this battery, neither Pb nor Cd is contained in the alloy of the thermal fuse unlike the prior art. Thus, it is possible to provide a battery capable of suppressing harm to the natural environment.

### BRIEF DESCRIPTION OF THE DRAWINGS

FIG. 1A is a top view of a thin-type thermal fuse according to a first embodiment of the invention, FIG. 1B is a section along I-I of FIG. 1A, and FIG. 1C is a top view partly in section corresponding to FIG. 1A.
FIG. 2A is a top view of a thin-type thermal fuse according a second embodiment of the invention, and FIG. 2B is a section along II-II of FIG. 2A.
FIG. 3A is a top view of a thin-type thermal fuse according to a third embodiment of the invention, FIG. 3B is a section along III-III of FIG. 3A, and FIG. 3C is a top view partly in section corresponding to FIG. 3A.
FIG. 4 is a perspective view of a battery using the inventive thin-type thermal fuse.
FIG. 5 is a section of a radial-type thermal fuse according to a fourth embodiment of the invention.
FIG. 6 is a section of an axial-type thermal fuse according to a fifth embodiment of the invention.
FIG. 7 is a section of a prior art thermal fuse.

### BEST MODES OF CARRYING OUT THE INVENTION

### (First Embodiment)

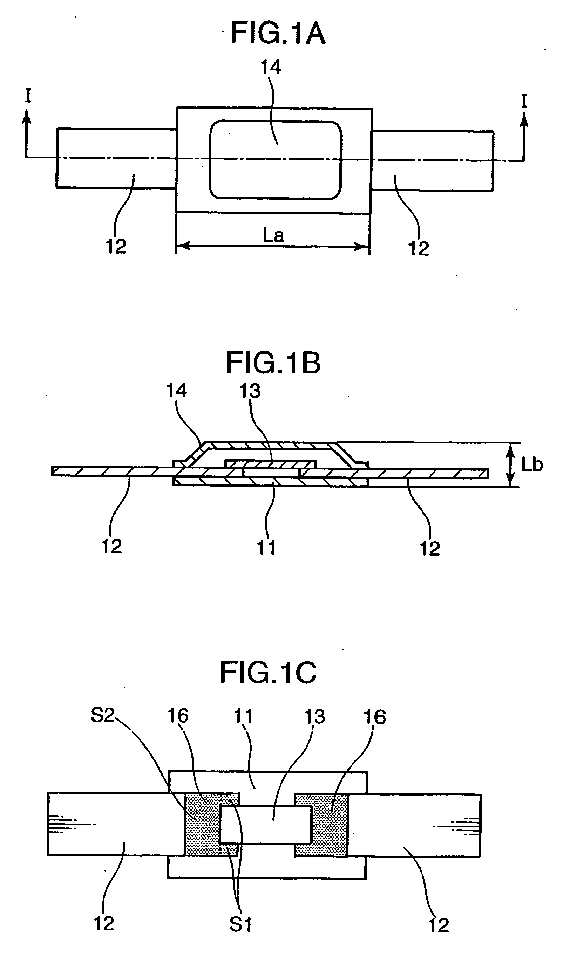

FIGS. 1A to 1C are views showing the construction of a thin-type thermal fuse according to a first embodiment of the invention, wherein FIG. 1A is a top view, FIG. 1B is a section along I-I of FIG. 1A, and FIG. 1C is a top view partly in section corresponding to FIG. 1A.

As shown in FIGS. 1A and 1B, the thin-type thermal fuse comprises: a pair of metal terminals 12; a first insulating film 11 to which the pair of metal terminals 12 are attached; a second insulating film 14 attached to the first insulating film 11 in such a manner as to define a space with the first insulating film 11; and a fusible alloy 13 arranged between the first and second insulating films 11, 14 and connected between the leading end portions of the pair of metal terminals 12.

The insulating film 11 is a sheet-like insulating film having a monolayer structure, and the pair of metal terminals 12 narrower than the first insulating film 11 are attached to the first insulating film 11. The fusible alloy 13 forms a thermal fuse element and bridges the leading end portions of the metal terminals 12 in the middle of the upper surface of the first insulating film 11, thereby being located above the first insulating film 11 to connect the leading end portions of the metal terminals 12.

Flux (not shown) including a resin obtained by adding a wax component containing amide stearate and the like and by adding an activator to rosin is coated around the fusible alloy 13. The second insulating film 14 is a sheet-like insulating film having a monolayer structure, located above the fusible alloy 13, and so sealed to the first insulating film 11 as to define an inner space with the first insulating film 11.

In this way, the fist and second insulating films 11, 14 enclose the fusible alloy 13, and the outer peripheral portion of the first insulating film 11 and that of the second insulating film 14 are sealed and fixed to each other while leaving a portion where the fusible alloy 13 is provided unfixed, thereby sealing the fusible alloy 13 to prevent the deterioration of the fusible alloy 13.

The thicknesses of the first and second insulating films 11, 14 are preferably 0.15 mm or smaller. If the thickness exceeds 0.15 mm, the thickness of the thermal fuse itself becomes thick, which is unsuitable for the thin-type thermal fuse.

Specific materials for the first and second insulating films 11, 14 may be a resin (preferably thermoplastic resin) containing any one of PET (polyethylene terephthalates), PEN (polyethylene naphthalates), ABS resin, SAN resin, polysulfone resin, polycarbonate resin, noryl, vinyl chloride resin, polyethylene resin, polyester resin, polypropylene resin, polyamide resin, PPS resin, polyacetal, fluororesin and polyesters as a main component.

Although the first and second insulating films 11, 14 have monolayer structures in this embodiment, the present invention is not particularly limited thereto. Sheets made of different materials may be laminated. For example, if the first and second insulating films 11, 14 are made of a film obtained by laminating a PET (polyethylene terephthalate) film and a PEN (polyethylene naphthalate) film, the strengths thereof can be increased, whereby mechanical strength can be improved. Further, in the case of fabricating the first and second insulating films 14 to have multilayer structures, a combination of a material having a low heat resistance and the one having a high heat resistance can be used in addition to the above combination of the materials.

If La denotes the length of a thermal-fuse main portion including the first and second insulating films 11, 14 and the fusible alloy 13, i.e. the length of the longer sides of the first and second insulating films 11, 14, a sufficient insulation distance cannot be ensured after cut off by melting in the case that La is below 2.0. On the other hand, in the case that La exceeds 7.5 mm, a necessary installation area increases if the thin-type thermal fuse is installed in a small-size battery. Thus, this is not practical. Accordingly, the length La of the thermal-fuse main portion is preferably 2.0 mm to 7.5 mm.

If Lb denotes the thickness from the outer surface of the first insulating film 11 to the outer surface of the second insulating film 14, i.e. the thickness from the lower surface of the first insulating film 11 to the upper surface of the second insulating film 14, a sufficient space for accommodating the fusible alloy 13 cannot be ensured in the case that Lb is below 0.4 mm. On the other hand, in the case that Lb exceeds 1.5 mm, the thickness of the thin-type thermal fuse becomes too thick in relation to projections, e.g. those of electrodes of the battery in which the thin-type thermal fuse is used, and this hinders the miniaturization of the battery. Accordingly, the thickness Lb from the lower surface of the first insulating film 11 to the upper surface of the second insulating film 14 is preferably 0.4 mm to 1.5 mm.

The pair of metal terminals 12 are strip-shaped or wire-shaped and mainly including for example nickel metal, nickel alloy like a copper nickel alloy, nickel or nickel alloy added with the other element(s), and the like. For instance, if the metal terminals 12 include a material whose nickel content is 98% or higher, its electrical resistivity is as low as 6.8×10⁻⁸ Ω·m to 12×10⁻⁸Ω·m. Thus, reliability such as corrosion resistance can be astonishingly improved.

The thickness of the metal terminals 12 themselves is preferably 0.15 mm or smaller. This is because the thermal fuse becomes too thick and unsuitable for a thin-type thermal fuse if the thickness exceeds 0.15 mm.

The metal terminals 12 are preferably made of a material having Young's modulus of 3×10¹⁰Pa to 8×10¹⁰Pa and a tensile strength of 4×10⁸Pa to 6×10⁸Pa. In this case, there is no likelihood of inadvertently bending the metal terminals 12 during handling or transportation, it is easy to bend the terminals and occurrences of breakage and other undesirable event can be prevented during bending.

More specifically, if Young's modulus of the metal terminals 12 is below 3×10¹⁰Pa, it is too easy to bend the metal terminals 12 and, accordingly, portions (e.g. electrically connecting portions at the end portions of the metal terminals 12) of the metal terminals 12 which should not be bent are likely to become uneven, thereby causing a problem of making it difficult to electrically connect the metal terminals 12 with the fusible alloy 13 by welding. On the other hand, if Young's modulus exceeds 8×10¹⁰Pa, portions of the metal terminals desired to be bent are difficult to bend, or broken. Further, if the tensile strength of the metal terminals 12 is below 4×10⁸Pa, it is too easy to bend the metal terminals 12. On the other hand, if the tensile strength exceeds 6×10⁸Pa, portions of the metal terminals 12 desired to be bent are difficult to bend, or broken.

The fusible alloy 13 can be produced by squeezing the wire-shaped fusible alloy having a circular cross section into a wire having a thickness of 0.4 mm or smaller and a rectangular or elliptical cross section and cutting the resulting wire to a suitable length. Die drawing, die extrusion or the like can be used as a method for producing the fusible alloy 13 into the wire. Further, the metal terminals 12 and the fusible alloy 13 can be connected by laser welding, heat welding, ultrasonic welding or the like. Particularly in the case of using laser welding, the fusible alloy 13 can be connected without damaging its unwelded portions since a heat-generating portion can be made smaller.

The fusible alloy 13 includes an Sn-Bi-In-Zn alloy. In this case, a thin-type thermal fuse having an operating temperature of 108°C or lower can be provided.

Since the melting point can be decreased by adding Bi to an Sn-In-Zn alloy and reducing the content of Sn, the fusible alloy 13 includes an Sn-Bi-In-Zn alloy containing: 0.5 to 15 weight% of Bi; 45 to 55 weight% of In; and 0.5 to 5.0 weight% of Zn; with the balance being Sn. In such a case, it is possible to provide a thin-type thermal fuse having an arbitrary operating temperature of 85°C to 107°C. Specifically, if the content of Bi exceeds 15 weight%, the melting point falls below 85°C and the difference between the solidus temperature and the liquidus temperature becomes larger to increase an operating temperature variation, wherefore a practical thin-type thermal fuse cannot be provided.

If the content of Zn exceeds 5.0 weight% in the above Sn-Bi-In-Zn alloy, the viscosity of the melted fusible alloy 13 increases. Thus, a time required for the fusible alloy 13 to be cut off after being melted is likely to vary. Therefore, the composition ratio of Zn is preferably 5.0 weight% or smaller

In the case that the flux coated on the fusible alloy 13 is melted, the composition ratios of In and Zn may decrease since, out of the metals constituting the fusible alloy 13, In and Zn have a higher reactivity with the flux than other metals. Thus, in the case of using the thermal fuse at a temperature exceeding the melting point of the flux for a long time, it is necessary to set high composition ratios for these metals. Therefore, in the above Sn-Bi-In-Zn alloy, it is preferable to set the content of In to 48 to 55 weight% and that of Zn to 1.3 to 5.0 weight%.

Further, if the composition ratio of Zn is 1.3 to 5.0 weight% in the above Sn-Bi-In-Zn alloy, the melting point becomes quite stable for the composition ratio of Zn. Thus, if the composition ratio of Zn is 1.3 to 5.0 weight%, a melting point variation caused by a composition variation becomes smaller when the fusible alloy 13 is produced. Therefore, it is possible to provide a thin-type thermal fuse having a highly precise cut-off temperature by melting.

If the thermal fuse is used at a temperature exceeding the melting point of the flux for a long time, it is necessary to set a high composition ratio for Zn as described above. In such a case, the composition ratio of Zn is preferably 2.0 to 5.0 weight%.

The flux to be coated on the fusible alloy 13 includes a resin obtained by adding a wax component containing amide stearate and the like and by adding an activator to rosin. This flux promotes the surface tension of the fusible alloy 13 by the action of rosin in the flux to rapidly fuse the fusible alloy 13.

The melting point of the flux can be adjusted between about 50°C and about 120°C by adjusting the added amount of the wax component. Since the flux cannot fulfil its function of promoting the surface tension of the fusible alloy 13 unless being melted, the melting point of the flux is set to be lower than that of the fusible alloy 13 by adjusting the added amount of the wax component. It should be noted that the melting point of the flux is measured as a peak of a measurement result in a measurement by a differential scanning calorimeter (DSC).

As the activator to be added to the flux may be preferably used: a chloride activator for example, aniline hydrochloride, hydrazine hydrochloride, phenylhydrazine hydrochloride, tetrachloronaphthalene , methylhydrazine hydrochloride, methylamine hydrochloride, dimethylamine hydrochloride, ethylamine hydrochloride, diethylamine hydrochloride, butylamine hydrochloride, cyclohexylamine hydrochloride, diethylethanolamine hydrochloride, etc.; or a bromine activator for example, aniline bromide, hydrazine bromide, phenylhydrazine bromide, cetylpyridine bromide, methylhydrazine bromide, methylamine bromide, dimethylamine bromide, ethylamine bromide, diethylamine bromide, butylamine bromide, cyclohexylamine bromide, diethylethanolamine bromide, etc.

The chloride activator has a higher reactivity with In and Zn than the bromine activator and quickly decreases in quantity. Thus, in the case that the fusible alloy 13 includes the Sn-Bi-In-Zn alloy, the effect of the activator can be kept for a long time even when the thermal fuse is used at a temperature exceeding the melting point of the flux if the bromine activator is used.

It is preferable to add about 0.1 to 3% of the activator in order to enhance the activity of rosin. In such a case, if the thin-type thermal fuse is cut off by melting, for example, on a condition of increasing the temperature by 1°C per minute, the cut-off temperature by melting is reduced by about 1°C to 2°C. Thus, it is possible to provide a thin-type thermal fuse having an excellent quick cut-off ability by melting.

If the flux is melted, the activator reacts with the metals in the fusible alloy 13 to gradually decrease its quantity. Accordingly, if the melting point of the flux is set at 60°C or higher, the activator in the flux hardly decreases in quantity even if the thin-type thermal fuse is, for example, used in a packaged battery or the like at about 55°C for a long time. Thus, it is possible to provide a thin-type thermal fuse having an excellent quick cut-off ability by melting.

Further, as shown in FIG. 1C, metal layers 16 including Sn, Cu or a like metal having a good wettability to the fusible alloy 13 are provided on the upper surfaces of the leading end portions of the metal terminals 12 and connected with the fusible alloy 13. In this case, transportations of the fusible alloy 13 toward the metal layers 16 after cut off by melting are accelerated since the wettability of Sn or Cu constituting the metal layer 16 to the fusible alloy 13 is better than that of nickel constituting the metal terminals 12. As a result, the fusible alloy 13 can be quickly cut off after fusing.

Here, if S₁, S₂ denote an area of each metal layer 16 at the opposite sides along a direction perpendicular to the longitudinal direction of the fusible alloy 13 and an area thereof at the outer side of the end of the fusible alloy 13, the fusible alloy 13 is more quickly cut off as an amount of the melted fusible alloy 13 toward the areas S₂ increases. Therefore, a relationship of S₁, S₂ is set preferably to be S₁ < S₂, more preferably to be S₁ < 2S₂.

A single metal of Cu, Sn, Bi or In or an alloy of these metals may be used as a material for the metal layers 16. It is also preferable to use an alloy having the same composition as the fusible alloy 13 as a material for the metal layers 16. In such a case, even if the metal constituting the metal layers 16 diffuses into the fusible alloy 13, the melting point of the fusible alloy 13 does not change since this diffusion amount is tiny.

The thickness of the metal layers 16 is preferably 15 µm or smaller. If the thickness exceeds 15 µm, a larger amount of the metal constituting the metal layers 16 diffuses into the fusible alloy 13, thereby changing the melting point of the fusible alloy 13 to cause an operating temperature variation of the thermal fuse.

As described above, in this embodiment, the fusible alloy 13 forming the thermal fuse element located above the first insulating film 11 and connected between the leading end portions of the pair of metal terminals 12 includes the the Sn-Bi-In-Zn alloy containing: 0.5 to 15 weight% of Bi; 45 to 55 weight% of In; and 0.5 to 5.0 weight% of Zn; with the balance being Sn. Thus, neither Pb nor Cd is contained in the fusible alloy unlike the prior art, with the result that a thin-type thermal fuse having no harm to the natural environment can be provided.

### (Second Embodiment)

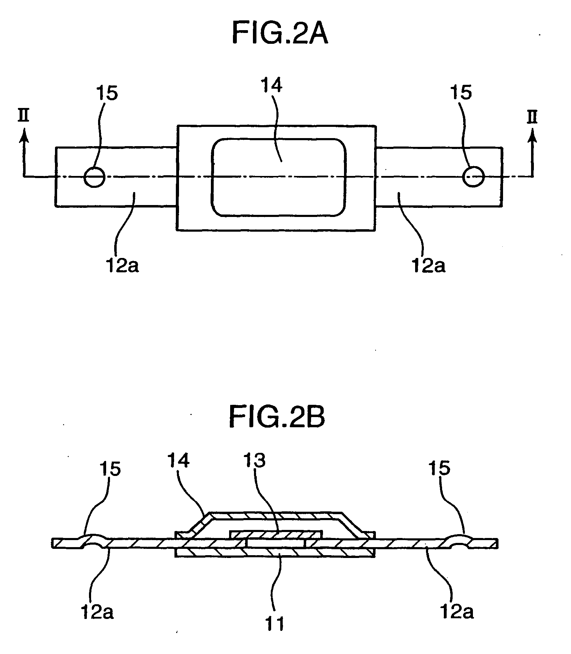

FIGS. 2A and 2B show the construction of a thin-type thermal fuse according to a second embodiment of the present invention, wherein FIG. 2A is a top view and FIG. 2B is a section along II-II of FIG. 2A. The thin-type thermal fuse shown in FIG. 2 differs from the one shown in FIG. 1 in that a pair of metal terminals 2a are formed to have a strip shape and projections 15 are provided at parts of the metal terminals 12a. Since other points are the same as in the thin-type thermal fuse shown in FIG. 1, no detailed description is given thereon.

As shown in FIGS. 2A and 2B, the round projections 15 are formed at ends of the metal terminals 12a extending out from a first insulating film 11 and a second insulating film 14. In this embodiment, effects similar to those of the first embodiment can be obtained. In addition, welding strength and welding positions can be stabilized to improve productivity since a welding current can be concentrated if connection is made at the projections 15 in the case that the pair of metal terminals 12a and external wiring (not shown) are connected by electric welding.

### (Third Embodiment)

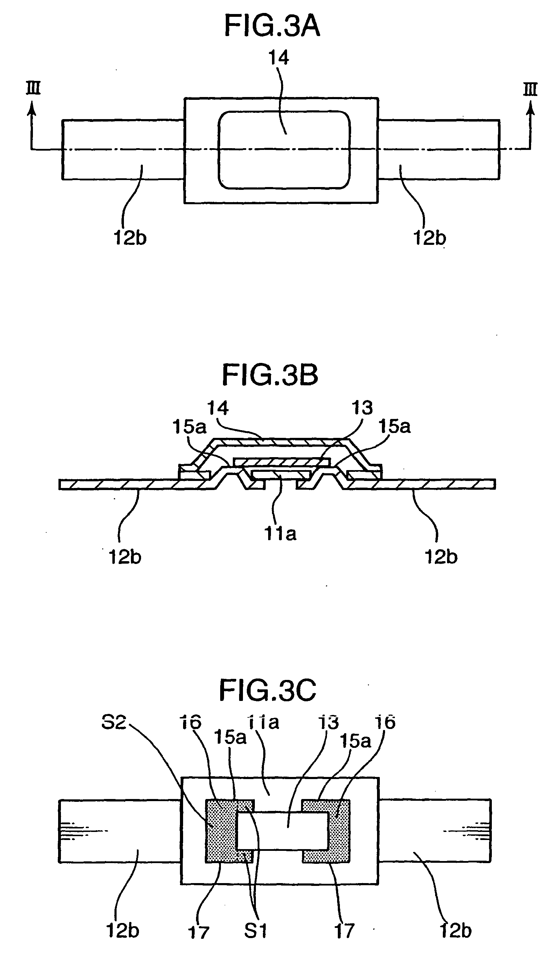

FIGS. 3A to 3C are views showing the construction of a thin-type thermal fuse according to a third embodiment of the invention, wherein FIG. 3A is a top view, FIG. 3B is a section along III-III of FIG. 3A, and FIG. 3C is a top view partly in section corresponding to FIG. 3A.

The thin-type thermal fuse shown in FIG. 3 differs from the one shown in FIG. 1 in that a pair of metal terminals 12b are attached to a first insulating film 11a such that end portions thereof partly project from the lower surface of the first insulating film 11 toward the upper surface thereof as shown in FIGS. 3B and 3C. Since other points are the same as in the thin-type thermal fuse shown in FIG. 1, no detailed description is given thereon.

As shown in FIGS. 3B and 3C, an inner end portion of each metal terminal 12b is bent to have a substantially wavelike shape, thereby forming a projection 15a at a part of the end portion of the metal terminal 12b, and the first insulating film 11a is formed with notches 17 where the respective projections 15a are to be mounted. By inserting the projections 15a into the notches 17, the pair of metal terminals 12b are attached to the first insulating film 11a such that the projections 15a thereof project from the first insulating film 11a toward a second insulating film 14. A fusible alloy 13 is connected with the upper surfaces of the projections 15a. In this way, the fusible alloy 13 forming a thermal fuse element is arranged between the first and second insulating films 11a, 14 to be connected between the leading end portions of the pair of metal terminals 12b.

As described above, in this embodiment, the positional relationship of the pair of metal terminals 12b and the first insulating film 11a can be determined by engaging the projections 15a with the notches 17. Thus, the pair of metal terminals 12b can be precisely attached to the first insulating film 11a and the thin-type thermal fuse can be highly precisely produced.

Further, in the thin-type thermal fuse of this embodiment as well, the fusible alloy 13 includes an Sn-Bi-In-Zn alloy containing: 0.5 to 15 weight% of Bi; 45 to 55 weight% of In; and 0.5 to 5.0 weight% of Zn; with the balance being Sn similar to the thin-type thermal fuse of the first embodiment. Thus, neither Pb nor Cd is contained in the fusible alloy unlike the prior art. As a result, it is possible to provide a thin-type thermal fuse having no harm to the natural environment.

In this embodiment as well, the melting point of the flux applied to the fusible alloy 13 is set at 60°C or higher similar to the first embodiment. Thus, even if the thermal fuse is used at about 55°C for a long time, for example, by being used in a packaged battery, the activator in the flux hardly decreases in quantity, wherefore a thin-type thermal fuse having an excellent quick cut-off ability by melting can be provided.

Similar to the first embodiment, metal layers 16 comprising Sn, Cu or the like having a good wettability to the fusible alloy 13 are also provided on the upper surfaces of the leading end portions of the metal terminals 12b and are connected with the fusible alloy 13 as shown in FIG. 3C in this embodiment. In this case, since the wettability of Sn or Cu constituting the metal layers 16 to the fusible alloy 13 is better than that of nickel constituting the metal terminals 12b, the transportation of the fusible alloy 13 after cut off by melting to the metal layers 16 is accelerated, with the result that the fusible alloy 13 can be quickly cut off.

Similar to the first embodiment, the fusible alloy 13 is more quickly cut off as an amount of the melted fusible alloy 13 toward areas S₂ increases in this embodiment if S₁, S₂ denote an area of each metal layer 16 at the opposite sides along a direction perpendicular to the longitudinal direction of the fusible alloy 13 and an area thereof at the outer side of the end of the fusible alloy 13. Therefore, it is preferable to set a relationship of S₁, S₂ to be S₁ < S₂, more preferably to be S₁ < 2S₂.

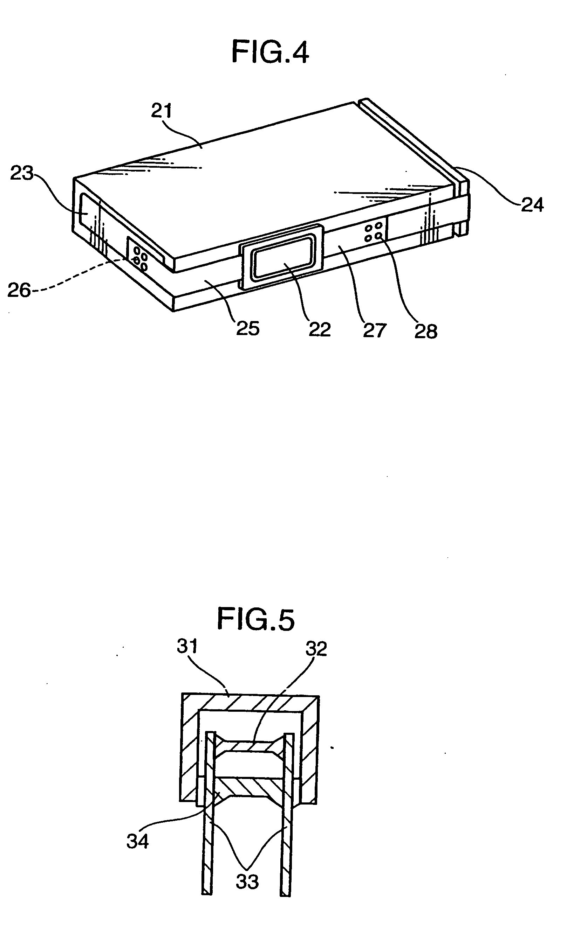

FIG. 4 is a perspective view of a battery using an inventive thermal fuse. As shown in FIG. 4, a thermal fuse 22 is mounted on one side surface at a longer side of a battery main body 21. The thermal fuse 22 is so electrically connected as to shut off a current upon the abnormal heat generation of the battery main body 21, so that the current is shut off if the heat generated from the battery main body 21 reaches a specified level or higher. Any of the above thin-type thermal fuses can be used as the thermal fuse 22. Either a radial-type thermal fuse or an axial-type thermal fuse to be described later may also be used. An external electrode 23 of the battery main body 21 is provided on one side surface at a shorter side of the battery main body 21, and one terminal 25 of the thermal fuse 22 and the external electrode 23 are electrically connected at a connecting portion 26 by means of spot welding or the like.

Further, a protecting circuit 24 and the battery main body 21 are electrically connected, and the protecting circuit 24 and an other electrode 27 of the thermal fuse 22 are electrically connected at a connecting portion 28 by means of spot welding or the like. Parts of the protecting circuit 24 are mounted on the protecting circuit 24 by Pb-free solder such as Sn-Ag based solder or Sn-Cu based solder.

In the above battery, any of the thin-type thermal fuses according to the first to third embodiments is used as the thermal fuse 22 and, in this thin-type thermal fuse, the fusible alloy 13 constituting the thermal fuse element includes an Sn-Bi-In-Zn alloy containing: 0.5 to 15 weight% of Bi; 45 to 55 weight% of In; and 0.5 to 5.0 weight% of Zn; and a remainder of Sn similar to the thin-type thermal fuse of the first embodiment. Thus, neither Pb nor Cd is contained in the fusible alloy unlike the prior art. As a result, it is possible to provide a thin-type thermal fuse having no harm to the natural environment.

Further, in the above battery, any of the thin-type thermal fuses according to the first to third embodiments is used as the thermal fuse 22 and, in these thin-type thermal fuses, the melting point of the flux coated on the fusible alloy 13 is set at 60°C or higher. Thus, even if the thermal fuse is used at about 55°C for a long time, for example, by being used in a packaged battery, the activator in the flux hardly decreases in quantity, wherefore a thin-type thermal fuse having an excellent quick cut-off ability by melting can be provided. (Fourth Embodiment)

FIG. 5 is a section of a radial-type thermal fuse according to a fourth embodiment of the present invention. In FIG. 5, an insulating casing 31 is in a form of: a cylindrical tube having a bottom formed and having an opening; or a rectangular tube having a bottom formed and having an opening, and comprising any of PBT (polybutylene terephthalate), PPS (polyphenyl sulphide), PET (polyethylene terephthalate), phenol resin, ceramic, glass and like materials.

The fusible alloy 32 is substantially in a form of a cylinder or a rectangular column arranged in the insulating casing 31 and including an Sn-Bi-In-Zn alloy. Thus, a radial-type thermal fuse free from Pb and Cd and having an operating temperature of 108°C or lower can be provided.

Since the melting point can be decreased by adding Bi to an Sn-In-Zn alloy and reducing the content of Sn, the fusible alloy 32 includes an Sn-Bi-In-Zn alloy containing: 0.5 to 15 weight% of Bi; 45 to 55 weight% of In; and 0.5 to 5.0 weight% of Zn; with the balance being Sn. In such a case, it is possible to provide a radial-type thermal fuse having an arbitrary operating temperature of 85°C to 107°C. Specifically, if the content of Bi exceeds 15 weight%, the melting point falls below 85°C and the difference between the solidus temperature and the liquidus temperature becomes larger to increase an operating temperature variation, wherefore a practical radial-type thermal fuse cannot be provided.

If the content of Zn exceeds 5.0 weight% in the above Sn-Bi-In-Zn alloy, the viscosity of the melted fusible alloy 32 increases. Thus, a time required for the fusible alloy 32 to be cut off after being melted is likely to vary. Therefore, the composition ratio of Zn is preferably 5.0 weight% or smaller.

Flux (not shown) including a resin obtained by adding a wax component containing amide stearate and the like and by adding an activator to rosin is coated around the fusible alloy 32. This flux acts to remove an oxide film of the fusible alloy 32 by being melted when the ambient temperature increases. The flux also acts to promote the surface tension of the fusible alloy 32 by the action of rosin in the flux to rapidly be cut off the fusible alloy 13.

The melting point of the flux can be adjusted between about 50°C and about 120°C by adjusting the added amount of the wax component. Since the flux cannot fulfil its function of promoting the surface tension of the fusible alloy 32 unless being melted, the melting point of the flux is set to be lower than that of the fusible alloy 32 by adjusting the added amount of the wax component. It should be noted that the melting point of the flux is measured as a peak of a measurement result in a measurement by a differential scanning calorimeter (DSC).

As the activator to be added to the flux may be preferably used: a chloride activator for example, aniline hydrochloride, hydrazine hydrochloride, phenylhydrazine hydrochloride, tetrachloronaphthalene , methylhydrazine hydrochloride, methylamine hydrochloride, dimethylamine hydrochloride, ethylamine hydrochloride; diethylamine hydrochloride, butylamine hydrochloride, cyclohexylamine hydrochloride, diethylethanolamine hydrochloride, etc.; or a bromine activator for example, aniline bromide, hydrazine bromide, phenylhydrazine bromide, cetylpyridine bromide , methylhydrazine bromide, methylamine bromide, dimethylamine bromide, ethylamine bromide, diethylamine bromide, butylamine bromide, cyclohexylamine bromide, diethylethanolamine bromide, etc.

The chloride activator has a higher reactivity with In and Zn than the bromine activator and quickly decreases in quantity. Thus, in the case that the fusible alloy 32 includes the Sn-Bi-In-Zn alloy, the effect of the activator can be kept for a long time even when the radial-type thermal fuse is used at a temperature exceeding the melting point of the flux if the bromine activator is used.

It is preferable to add about 0.1 to 3% of the activator in order to enhance the active force of rosin. In such a case, if the radial-type thermal fuse is cut off by melting, for example, on a condition of increasing the temperature by 1°C per minute, the cut-off temperature by melting is reduced by about 1°C to 2°C. Thus, it is possible to provide a radial-type thermal fuse having an excellent quick cut-off ability by melting.

If the flux is melted, the activator reacts with the metals in the fusible alloy 32 to gradually decrease its quantity. Accordingly, if the melting point of the flux is set at 60°C or higher, the activator in the flux hardly decreases in quantity even if the radial-type thermal fuse is, for example, used in a packaged battery or the like at about 55°C for a long time. Thus, it is possible to provide a radial-type thermal fuse having an excellent quick cut-off ability by melting.

If the flux is melted, the composition ratios of In and Zn may decrease since, out of the metals constituting the fusible alloy 32, In and Zn have a higher reactivity with the flux than other metals. Thus, in the case of using the thermal fuse at a temperature exceeding the melting point of the flux for a long time, it is necessary to set high composition ratios for these metals. Therefore, in the above Sn-Bi-In-Zn alloy, it is preferable to set the content of In to 48 to 55 weight% and that of Zn to 1.3 to 5.0 weight%.

Further, in the above Sn-Bi-In-Zn alloy, the melting point becomes quite stable for the composition ratio of Zn if the composition ratio of Zn is 1.3 to 5.0 weight%. Thus, if the composition ratio of Zn is 1.3 to 5.0 weight%, a melting point variation caused by a composition variation becomes smaller when the fusible alloy 32 is produced. Therefore, it is possible to provide a radial-type thermal fuse having a highly precise cut-off temperature by melting.

If the thermal fuse is used at a temperature exceeding the melting point of the flux for a long time, it is necessary to set a high composition ratio for Zn as described above. In such a case, the composition ratio of Zn is preferably 2.0 to 5.0 weight%.

One end portion of each lead conductor 33 is connected with a corresponding end portion of the fusible alloy 32, whereas the other end portion thereof is protruded through the opening of the insulating casing 31 to the outside of the insulating casing 31. The lead conductors 33 are wires comprising a single metal such as Cu, Fe or Ni or an alloy of these metals, and metal plating of any one of Sn, Zn, Bi, In, Ag and Cu or an alloy containing these metals is applied to the outer surfaces of the lead conductors 33.

A sealing element 34 comprises a hard resin such as an epoxy or a silicone for sealing the opening of the insulating casing 31. The fusible alloy 32 and a pair of lead conductors 33 can be connected by welding or ultrasonic welding or by applying a power to the lead conductors 33 and the fusible alloy 32 to melt the fusible alloy 32.

As described above, in the radial-type thermal fuse of this embodiment, the fusible alloy 32 constituting the thermal fuse element includes an Sn-Bi-In-Zn alloy containing: 0.5 to 15 weight% of Bi; 45 to 55 weight% of In; and 0.5 to 5.0 weight% of Zn; with the balance being Sn. Thus, neither Pb nor Cd is contained in the fusible alloy unlike the prior art. Therefore, it is possible to provide a radial-type thermal fuse having no harm to the natural environment. Further, since a pair of lead conductors 33 connected with the fusible alloy 32 at one end portion are so protruded through the opening of the insulating casing 31 outside the insulating casing 31 as to extend in parallel with each other, a degree of freedom in mounting this radial-type thermal fuse on a battery or the like can be improved.

### (Fifth Embodiment)

FIG. 6 is a section of an axial-type thermal fuse according to a fifth embodiment of the present invention. In FIG. 6, an insulating casing 41 is in a form of a cylindrical tube having openings at opposite ends, and comprises any of PBT (polybutylene terephthalate), PPS (polyphenyl sulphide), PET (polyethylene terephthalate), phenol resin, ceramic, glass and like materials.

The fusible alloy 42 is substantially in a form of a cylinder or a rectangular column arranged in the insulating casing 41 and including an Sn-Bi-In-Zn alloy. Thus, an axial-type thermal fuse free from Pb and Cd and having an operating temperature of 108°C or lower can be provided.

Since the melting point can be decreased by adding Bi to an Sn-In-Zn alloy and reducing the content of Sn, the fusible alloy 42 includes an Sn₋Bi-In-Zn alloy containing: 0.5 to 15 weight% of Bi; 45 to 55 weight% of In; and 0.5 to 5.0 weight% of Zn; with the balance being Sn. In such a case, it is possible to provide an axial-type thermal fuse having an arbitrary operating temperature of 85°C to 107°C. Specifically, if the content of Bi exceeds 15 weight%, the melting point falls below 85°C and the difference between the solidus temperature and the liquidus temperature becomes larger to increase an operating temperature variation, wherefore a practical axial-type thermal fuse cannot be provided.

If the content of Zn exceeds 5.0 weight% in the above Sn-Bi-In-Zn alloy, the viscosity of the melted fusible alloy 42 increases. Thus, a time required for the fusible alloy 42 to be cut off after being melted is likely to vary. Therefore, the composition ratio of Zn is preferably 5.0 weight% or smaller.

Flux (not shown) including a resin obtained by adding a wax component containing amide stearate and the like and by adding an activator to rosin is coated around the fusible alloy 42. This flux acts to remove an oxide film of the fusible alloy 42 by being melted when the ambient temperature increases. The flux also acts to promote the surface tension of the fusible alloy 42 by the action of rosin in the flux to rapidly fuse the fusible alloy 13.

The melting point of the flux can be adjusted between about 50°C and about 120°C by adjusting the added amount of the wax component. Since the flux cannot fulfil its function of promoting the surface tension of the fusible alloy 42 unless being melted, the melting point of the flux is set to be lower than that of the fusible alloy 42 by adjusting the added amount of the wax component. It should be noted that the melting point of the flux is measured as a peak of a measurement result in a measurement by a differential scanning calorimeter (DSC).

As the activator to be added to the flux may be preferably used: a chloride activator for example, aniline hydrochloride, hydrazine hydrochloride, phenylhydrazine hydrochloride, tetrachloronaphthalene , methylhydrazine hydrochloride, methylamine hydrochloride, dimethylamine hydrochloride, ethylamine hydrochloride, diethylamine hydrochloride, butylamine hydrochloride, cyclohexylamine hydrochloride, diethylethanolamine hydrochloride, etc.; or a bromine activator for example, aniline bromide, hydrazine bromide, phenylhydrazine bromide, cetylpyridine bromide , methylhydrazine bromide, methylamine bromide, dimethylamine bromide, ethylamine bromide, diethylamine bromide, butylamine bromide, cyclohexylamine bromide, diethylethanolamine bromide, etc.

The chloride activator has a higher reactivity with In and Zn than the bromine activator and quickly decreases in quantity. Thus, in the case that the fusible alloy 42 includes the Sn-In-Zn alloy or Sn-Bi-In-Zn alloy, the effect of the activator can be kept for a long time even when the axial-type thermal fuse is used at a temperature exceeding the melting point of the flux if the bromine activator is used.

It is preferable to add about 0.1 to 3% of the activator in order to enhance the activity of rosin. In such a case, if the axial-type thermal fuse is cut off by melting, for example, on a condition of increasing the temperature by 1°C per minute, the cut-off temperature by melting is reduced by about 1°C to 2°C. Thus, it is possible to provide an axial-type thermal fuse having an excellent quick cut-off ability by melting.

If the flux is melted, the activator reacts with the metals in the fusible alloy 42 to gradually decrease its quantity. Accordingly, if the melting point of the flux is set at 60°C or higher, the activator in the flux hardly decreases in quantity even if the axial-type thermal fuse is, for example, used in a packaged battery or the like at about 55°C for a long time. Thus, it is possible to provide a axial-type thermal fuse having an excellent quick cut-off ability by melting.

If the flux is melted, the composition ratios of In and Zn may decrease since, out of the metals constituting the fusible alloy 42, In and Zn have a higher reactivity with the flux than other metals. Thus, in the case of using the thermal fuse at a temperature exceeding the melting point of the flux for a long time, it is necessary to set high composition ratios for these metals. Therefore, in the above Sn-Bi-In-Zn alloy, it is preferable to set the content of In to 48 to 55 weight% and that of Zn to 1.3 to 5.0 weight%.

Further, in the above Sn-Bi-In-Zn alloy, the melting point becomes quite stable for the composition ratio of Zn if the composition ratio of Zn is 1.3 to 5.0 weight%. Thus, if the composition ratio of Zn is 1.3 to 5.0 weight%, a melting point variation caused by a composition variation becomes smaller when the fusible alloy 42 is produced. Therefore, it is possible to provide an axial-type thermal fuse having a highly precise cut-off temperature by melting.

If the thermal fuse is used at a temperature exceeding the melting point of the flux for a long time, it is necessary to set a high composition ratio for Zn as described above. In such a case, the composition ratio of Zn is preferably 2.0 to 5.0 weight%.

One end portion of each lead conductor 43 is connected with a corresponding end portion of the fusible alloy 42, whereas the other end portion thereof is protruded through the corresponding opening of the insulating casing 41 to the outside of the insulating casing 41. The lead conductors 43 are wires comprising a single metal such as Cu, Fe or Ni or an alloy of these metals, and metal plating of any one of Sn, Zn, Bi, In, Ag and Cu or an alloy containing these metals is applied to the outer surfaces of the lead conductors 43.

Sealing elements 44 comprise a hard resin such as an epoxy or a silicone for sealing the openings at the opposite ends of the insulating casing 41. The fusible alloy 42 and a pair of lead conductors 43 can be connected by welding or ultrasonic welding or by applying a power to the lead conductors 43 and the fusible alloy 42 to fuse the fusible alloy 42.

As described above, in the axial-type thermal fuse of this embodiment, the fusible alloy 42 constituting the thermal fuse element includes an Sn-Bi-In-Zn alloy containing: 0.5 to 15 weight% of Bi; 45 to 55 weight% of In; and 0.5 to 5.0 weight% of Zn; with the balance being Sn. Thus, neither Pb nor Cd is contained in the fusible alloy unlike the prior art. Therefore, it is possible to provide an axial-type thermal fuse having no harm to the natural environment. Further, since the insulating casing 41 in which the fusible alloy 42 is provided is in the form of a cylindrical tube having the openings at the opposite ends, there is no directionality upon mounting this axial-type thermal fuse on a battery or the like, wherefore the axial-type thermal fuse can be easily handled at the time of production.

An electrical device to which the inventive thermal fuses are applied is not particularly limited to the above battery, and the inventive thermal fuses are similarly applicable to other electrical devices to obtain similar effects. Further, characterizing portions of the respective embodiments can be arbitrarily combined. In such a case, the functions and effects of the characterizing portions can be fulfilled.

### INDUSTRIAL APPLICABILITY

As described above, since the thermal fuse element includes an Sn-Bi-In-Zn alloy according to the present invention, neither Pb nor Cd is contained in the thermal fuse element unlike the prior art. Thus, harm to the natural environment can be suppressed and the present invention can be suitably applied to a thermal fuse element, a thermal fuse, a battery using such a thermal fuse, etc.

## Claims

1. A thermal fuse element having an arbitrary operating temperature of 85°C to 107°C, including an Sn-Bi-In-Zn alloy, wherein the alloy consists of 0.5 to 15 weight% of Bi; 45 to 55 weight% of In; and 0.5 to 5 weight% of Zn; the balance being Sn and unavoidable impurities.

2. The thermal fuse element according to claim 1, wherein the thermal fuse element includes an Sn-Bi-In-Zn alloy consisting of: 0.5 to 15 weight% of Bi; 48 to 55 weight% of In; and 1.3 to 5 weight% of Zn; the balance being Sn and unavoidable impurities.

3. A thermal fuse comprising a thermal fuse element according to claim 1.

4. The thermal fuse according to claim 3, wherein the alloy includes an Sn-Bi-In-Zn alloy consisting of: 0.5 to 15 weight% of Bi; 48 to 55 weight% of In; and 1.3 to 5 weight% of Zn; the balance being Sn and unavoidable impurities.

5. The thermal fuse according to claim 3, wherein the alloy is coated by flux and the melting point of the flux is 60°C or higher.

6. The thermal fuse according to claim 3, wherein the alloy is coated by flux and a bromide activator is added in the flux.

7. The thermal fuse according to claim 3, further comprising:
a pair of metal terminals;
a first insulating film to which the pair of metal terminals are attached; and
a second insulating film attached to the first insulating film so as to define a space with the first insulating films,
wherein the alloy is arranged between the first and second insulating films and connected between the leading end portions of the pair of metal terminals.

8. The thermal fuse according to claim 7, wherein La is set to lie within a range of 2.0 mm to 7.5 mm, wherein the La is a length of a thermal-fuse main portion comprising the first insulating film, the second insulating film and the alloy.

9. The thermal fuse according to claim 7, wherein Lb is set to lie within a range of 0.4 mm to 1.5 mm, wherein the Lb is a thickness between the outer surface of the first insulating film and the outer surface of the second insulating film.

10. The thermal fuse according to claim 7, wherein a projection is formed at an end portion of each metal terminal, the pair of metal terminals are attached to the first insulating film such that the projections project from the first insulating film side toward the second insulating film side, and the alloy is connected with the projections.

11. The thermal fuse according to claim 7, wherein a projection is formed at an end portion of each metal terminal which extends out from the first insulating film and from the second insulating film.

12. The thermal fuse according to claim 3, further comprising:
an insulating casing in a form of a tube having a bottom formed and having an opening;
a pair of lead conductors whose each one end portion protruded in the same direction through the opening of the insulation casing outside the insulating casing; and
a sealing element for sealing the opening of the insulating casing,
wherein the alloy is placed in the insulating casing and connected with the other end portions of the pair of lead conductors.

13. The thermal fuse according to claim 3, further comprising:
an insulating casing in a form of a cylindrical tube having openings at opposite ends;
a pair of lead conductors whose each one end portion protruded through the corresponding one of the openings at the opposite ends of the insulating casing; and
sealing elements for sealing the openings at the opposite ends of the insulating casing,
wherein the alloy is placed in the insulating casing and connected with the other ends of the pair of lead conductors.

14. A battery, comprising:
a battery main body; and
a thermal fuse electrically connected to shut off a current upon an abnormal heat generation of the battery main body,
wherein the thermal fuse has an arbitrary operating temperature of 85°C to 107°C and includes an alloy, the alloy includes an Sn-Bi-In-Zn alloy, and the alloy consists of 0.5 to 15 weight% of Bi; 45 to 55 weight% of In; and 0.5 to 5 weight% of Zn; the balance being Sn and unavoidable impurities.

## Patentansprüche

1. Thermisches Sicherungselement mit einer beliebigen Betriebstemperatur von 85°C bis 107°C, beinhaltend eine Sn-Bi-In-Zn Legierung, wobei die Legierung aus 0,5 bis 15 Gew.-% an Bi; 45 bis 55 Gew.-% an In; und 0,5 bis 5 Gew.-% an Zn besteht; wobei der Ausgleich Sn und unvermeidbare Verunreinigungen sind.

2. Thermisches Sicherungselement nach Anspruch 1, wobei das thermische Sicherungselement eine Sn-Bi-In-Zn Legierung beinhaltet, bestehend aus: 0,5 bis 15 Gew.-% an Bi; 48 bis 55 Gew.-% an In; und 1,3 bis 5 Gew.-% an Zn; wobei der Ausgleich Sn und unvermeidbare Verunreinigungen sind.

3. Thermische Sicherung, die ein thermisches Sicherungselement nach Anspruch 1 umfasst.

4. Thermische Sicherung nach Anspruch 3, wobei die Legierung eine Sn-Bi-In-Zn Legierung beinhaltet, bestehend aus: 0,5 bis 15 Gew.-% an Bi; 48 bis 55 Gew.-% an In; und 1,3 bis 5 Gew.-% an Zn; wobei der Ausgleich Sn und unvermeidbare Verunreinigungen sind.

5. Thermische Sicherung nach Anspruch 3, wobei die Legierung durch ein Flussmittel beschichtet ist und der Schmelzpunkt des Flussmittels 60°C oder höher ist.

6. Thermische Sicherung nach Anspruch 3, wobei die Legierung durch ein Flussmittel beschichtet ist und ein Bromid-Aktivator in dem Flussmittel zugegeben ist.

7. Thermische Sicherung nach Anspruch 3, die ferner umfasst:
ein Paar von Metallanschlüssen;
einen ersten Isolierfilm, an welchen das Paar von Metallanschlüssen angebracht ist; und
einen zweiten Isolierfilm, der an den ersten Isolierfilm angebracht ist, um einen Raum mit den ersten Isolierfilmen zu definieren,
wobei die Legierung zwischen dem ersten und zweiten Isolierfilm angeordnet ist und zwischen den vorderen Endabschnitten des Paars von Metallanschlüssen verbunden ist.

8. Thermische Sicherung nach Anspruch 7, wobei La eingestellt ist, innerhalb eines Bereichs von 2,0 mm bis 7,5 mm zu liegen, wobei das La eine Länge eines Hauptabschnitts der thermischen Sicherung ist, umfassend den ersten Isolierfilm, den zweiten Isolierfilm und die Legierung.

9. Thermische Sicherung nach Anspruch 7, wobei Lb eingestellt ist, innerhalb eines Bereichs von 0,4 mm bis 1,5 mm zu liegen, wobei das Lb eine Dicke zwischen der äußeren Oberfläche des ersten Isolierfilms und der äußeren Oberfläche des zweiten Isolierfilms ist.

10. Thermische Sicherung nach Anspruch 7, wobei eine Erhebung an einem Endabschnitt jedes Metallanschlusses gebildet ist, wobei das Paar von Metallanschlüssen so an den ersten Isolierfilm angebracht ist, dass die Erhebungen von der Seite des ersten Isolierfilms in Richtung der Seite des zweiten Isolierfilms hervorstehen, und die Legierung mit den Erhebungen verbunden ist.

11. Thermische Sicherung nach Anspruch 7, wobei eine Erhebung an einem Endabschnitt jedes Metallanschlusses gebildet ist, welche sich von dem ersten Isolierfilm und von dem zweiten Isolierfilm heraus erstreckt.

12. Thermische Sicherung nach Anspruch 3, die ferner umfasst:
ein isolierendes Gehäuse in einer Form einer Röhre mit einem gebildeten Boden und mit einer Öffnung;
ein Paar von Anschlussleitern, deren jeweiliger Endabschnitt in der gleichen Richtung durch die Öffnung des isolierenden Gehäuses außerhalb des isolierenden Gehäuses hervorsteht; und
ein Versiegelungselement zum Versiegeln der Öffnung des isolierenden Gehäuses,
wobei die Legierung in dem isolierenden Gehäuse platziert ist und mit den anderen Endabschnitten des Paars von Anschlussleitern verbunden ist.

13. Thermische Sicherung nach Anspruch 3, die ferner umfasst:
ein isolierendes Gehäuse in einer Form einer zylindrischen Röhre mit Öffnungen an entgegengesetzten Enden;
ein Paar von Anschlussleitern, deren jeweiliger Endabschnitt durch die entsprechende der Öffnungen an den entgegengesetzten Enden des isolierenden Gehäuses hervorsteht; und
Versiegelungselemente zum Versiegeln der Öffnungen an den entgegengesetzten Enden des isolierenden Gehäuses,
wobei die Legierung in dem isolierenden Gehäuse platziert ist und mit den anderen Enden des Paars von Anschlussleitern verbunden ist.

14. Batterie, die umfasst:
einen Batteriehauptkörper; und
eine thermische Sicherung, die elektrisch verbunden ist, um einen Strom bei einer abnormalen Wärmeerzeugung des Batteriehauptkörpers abzuschalten,
wobei die thermische Sicherung eine beliebige Betriebstemperatur von 85°C bis 107°C aufweist und eine Legierung beinhaltet, wobei die Legierung eine Sn-Bi-In-Zn Legierung beinhaltet, und die Legierung besteht aus 0,5 bis 15 Gew.-% an Bi; 45 bis 55 Gew.-% an In; und 0,5 bis 5 Gew.-% an Zn besteht; wobei der Rest Sn und unvermeidbare Verunreinigungen sind.

## Revendications

1. Elément fusible thermique ayant une température de fonctionnement arbitraire allant de 85°C à 107°C, comprenant un alliage de Sn-Bi-In-Zn, où l'alliage est constitué de 0,5 à 15% en poids de Bi ; 45 à 55% en poids de In ; et 0,5 à 5% en poids de Zn ; le reste étant du Sn et des impuretés inévitables.

2. Elément fusible thermique selon la revendication 1, dans lequel l'élément fusible thermique comporte un alliage de Sn-Bi-In-Zn composé de : 0,5 à 15% en poids de Bi ; 48 à 55% en poids de In ; et 1,3 à 5% en poids de Zn ; le reste étant du Sn et des impuretés inévitables.

3. Fusible thermique comprenant un élément fusible thermique selon la revendication 1.

4. Fusible thermique selon la revendication 3, dans lequel l'alliage comporte un alliage de Sn-Bi-In-Zn composé de : 0,5 à 15% en poids de Bi ; 48 à 55% en poids de In ; et 1,3 à 5% en poids de Zn ; le reste étant du Sn et des impuretés inévitables.

5. Fusible thermique selon la revendication 3, dans lequel l'alliage est enrobé par un fondant et le point de fusion du fondant est de 60°C ou plus.

6. Fusible thermique selon la revendication 3, dans lequel l'alliage est enrobé par un fondant et un activateur à base de bromure est ajouté dans le fondant.

7. Fusible thermique selon la revendication 3, comprenant en outre:
une paire de bornes métalliques;
un premier film isolant auquel la paire de bornes métalliques sont fixées, et
un deuxième film isolant fixé au premier film isolant afin de définir un espace avec le premier film isolant,
dans lequel l'alliage est agencé entre les premier et deuxième films isolants et est relié entre les parties d'extrémité d'attaque de la paire de bornes métalliques.

8. Fusible thermique selon la revendication 7, dans lequel le La est réglée de façon à se trouver dans une plage de 2,0 mm à 7,5 mm, où La est une longueur d'une partie principale du fusible thermique comprenant le premier film isolant, le deuxième film isolant et l'alliage.

9. Fusible thermique selon la revendication 7, où Lb est réglée de façon à se trouver dans une plage de 0,4 à 1,5 mm, où Lb est une épaisseur entre la surface extérieure du premier film isolant et la surface extérieure du deuxième film isolant.

10. Fusible thermique selon la revendication 7, dans lequel une projection est formée au niveau d'une partie d'extrémité de chaque borne métallique, la paire de bornes métalliques sont fixées au premier film isolant de sorte que la projection se projette du côté premier film isolant jusqu'au côté deuxième film isolant, et que l'alliage soit relié aux projections.

11. Fusible thermique selon la revendication 7, dans lequel une projection est formée à une partie d'extrémité de chaque borne métallique qui s'étend du premier film isolant et du deuxième film isolant.

12. Fusible thermique selon la revendication 3, comprenant en outre :
un boîtier isolant en forme de tube ayant un fond formé et ayant une ouverture ;
une paire de conducteurs de sortie dont chaque partie d'extrémité fait saillie dans la même direction à travers l'ouverture du boîtier isolant à l'extérieur du boîtier isolant ; et
un élément d'étanchéité pour assurer l'étanchéité de l'ouverture du boîtier isolant,
dans lequel l'alliage est placé dans le boîtier isolant et relié aux autres parties d'extrémité de la paire de conducteurs en sortie.

13. Fusible thermique selon la revendication 3, comprenant en outre :
un boîtier isolant en forme de tube cylindrique ayant des ouvertures au niveau d'extrémités opposées ;
une paire de conducteurs de sortie dont chaque partie d'extrémité fait saillie à travers l'ouverture correspondante parmi les ouvertures au niveau des extrémités opposées du boîtier isolant ; et
des éléments d'étanchéité pour assurer l'étanchéité des ouvertures au niveau des extrémités opposées du boîtier isolant,
dans lequel l'alliage est placé dans le boîtier isolant et relié aux autres extrémités de la paire de conducteurs de sortie.

14. Batterie, comprenant:
un corps principal de batterie ; et
un fusible thermique électriquement connecté pour couper un courant lors d'une génération de chaleur anormale du corps principal de la batterie,
dans lequel le fusible thermique a une température de fonctionnement arbitraire de 85°C à 107°C et comporte un alliage, l'alliage comporte un alliage de Sn-Bi-In-Zn, et l'alliage est constitué de 0,5 à 15% en poids de Bi; 45 à 55% en poids de In; et 0,5 à 5% en poids de Zn, le reste étant du Sn et des impuretés inévitables.
